# EUROPEAN PATENT APPLICATION

(11) **EP 4 579 441 A1**
(43) Date of publication of application: **02.07.2025**
(21) Application number: 23878869.9
(22) Date of filing: 12.09.2023
(51) Int. Cl.: G06F 8/656, G06F 9/445, G06F 8/20, G06F 8/36, G06F 8/30

(54) **SERVICE GOVERNANCE METHOD AND APPARATUS**

(30) Priority: 17.10.2022 CN 202211267641; 09.02.2023 CN 202310092905
(71) Applicant: Huawei Cloud Computing Technologies Co., Ltd., Guiyang, Guizhou 550025 (CN)
(72) Inventor: LUAN, Wenfei, Guiyang, Guizhou 550025 (CN); YANG, Yi, Guiyang, Guizhou 550025 (CN)
(74) Representative: Pfenning, Meinig & Partner mbB
(86) International application number: PCT/CN2023/118257
(87) International publication number: WO 2024/082875

(57) **Abstract**

Embodiments of this application disclose a service governance method, to improve hot update performance of a service governance function. The method in embodiments of this application includes: obtaining first plug-in code, where the first plug-in code includes first service governance logic and first instrumentation logic, and the first service governance logic is decoupled from the first instrumentation logic; inserting a first instrumentation into an application program based on the first instrumentation logic, where the first instrumentation is used for requesting a governance function scheduler to allocate a first governance logic instance from multiple versions of governance logic instances, the first governance logic instance is used for executing the first service governance logic, and the application program is a running program; and performing service governance based on the first service governance logic when the first instrumentation is executed.

## Description

This application claims priorities to Chinese Patent Application No. 202211267641.4, filed with the China National Intellectual Property Administration on October 17, 2022 and entitled "SERVICE GOVERNANCE UPDATE METHOD AND APPARATUS", and to Chinese Patent Application No. 202310092905.5, filed with the China National Intellectual Property Administration on February 9, 2023 and entitled "SERVICE GOVERNANCE METHOD AND APPARATUS", both of which are incorporated herein by reference in their entireties.

### TECHNICAL FIELD

Embodiments of this application relate to the field of computers, and in particular, to a service governance method and an apparatus.

### BACKGROUND

Service governance refers to management and governance for microservice in a microservice architecture. Microservice governance is, for example, service registry and discovery, load balancing, and application routing. A Java agent technology enables a service governance function to be loaded into an application program of a service, so that specific service governance logic does not need to be written in the application program of the service.

Currently, in a service governance process based on the Java agent technology, the service governance function needs to be loaded to a computing device by using a service governance function plug-in. The computing device parses the service governance function plug-in, and inserts instrumentation code into the application program based on service governance logic obtained through parsing. When the instrumentation code in the application program is executed, the computing device is triggered to implement the service governance function.

In a process in which the computing device updates the service governance function, when the computing device inserts instrumentation code into the application program based on a new-version service governance function plug-in, an old-version service governance function is interrupted. Consequently, hot update performance of the service governance function of the computing device is poor.

### SUMMARY

Embodiments of this application provide a service governance method and an apparatus, to improve hot update performance of a service governance function.

A first aspect of embodiments of this application provides a service governance method. The method may be performed by a computing device, may be performed by a component of the computing device, for example, a processor, a chip, or a chip system of the computing device, or may be implemented by a logical module or software that can implement all or some functions of the computing device. An example in which the computing device performs the method is used. The method provided in the first aspect includes the following steps: The computing device obtains first plug-in code, where the first plug-in code includes first service governance logic and first instrumentation logic, and the first service governance logic is decoupled from the first instrumentation logic. The computing device inserts a first instrumentation into an application program based on the first instrumentation logic, where the first instrumentation is used for requesting a governance function scheduler to allocate a first governance logic instance from multiple versions of governance logic instances, the first governance logic instance is used for executing the first service governance logic, and the application program is a running program. The computing device performs service governance based on the first service governance logic when the first instrumentation is executed.

The service governance logic and the instrumentation logic in the first plug-in code provided in this embodiment of this application are structurally decoupled from each other, so that the computing device can separately update the service governance logic and the instrumentation logic in different manners. In other words, inserting the instrumentation into the application program by the computing device does not interrupt execution of the service governance logic by the service governance logic instance. This avoids interruption of a service governance function in an update process of the service governance function, so that hot update performance of the service governance function is improved.

In a possible implementation, after obtaining the first plug-in code, the computing device parses the first plug-in code to obtain the first service governance logic and the first instrumentation logic, and the computing device creates the first governance logic instance by using the governance function scheduler, where the first governance logic instance is used for executing the first service governance logic.

In this embodiment of this application, the computing device constructs the governance function scheduler, and the governance function scheduler can create and manage new-version and old-version governance logic instances, so that implementability of the solution is improved.

In a possible implementation, the computing device obtains second plug-in code, where the second plug-in code includes second service governance logic. The computing device creates a second governance logic instance by using the governance function scheduler, where the second governance logic instance is used for executing the second service governance logic, and the second governance logic instance and the first governance logic instance coexist. The first governance logic and the second governance logic are both stored in a memory.

In this embodiment of this application, in a process in which the computing device updates the service governance logic, the new-version governance logic instance and the old-version governance logic instance can coexist, so that switching of the second governance logic instance does not need to interrupt the first governance logic instance. In this way, hot update of the service governance function is implemented, and the hot update performance of the service governance function is improved.

In a possible implementation, the second governance logic instance is used for updating the first governance logic instance. After creating the second governance logic instance by using the governance function scheduler, the computing device performs service governance based on the second service governance logic when the first instrumentation is executed. Specifically, the first instrumentation invokes the governance function scheduler to allocate the second governance logic instance, and the second governance logic instance executes the second service governance logic.

In this embodiment of this application, because the instrumentation logic and the service governance logic are decoupled from each other, the service governance logic can be independently updated without re-instrumentation. In this way, the hot update performance of the service governance function is improved.

In a possible implementation, the second plug-in code further includes second instrumentation logic. The computing device inserts a second instrumentation into the application program based on the second instrumentation logic, where the second instrumentation is used for updating the first instrumentation, and the second instrumentation is used for requesting the governance function scheduler to allocate the second governance logic instance. The computing device performs service governance based on the second service governance logic when the second instrumentation is executed. In this case, the second governance logic instance is a latest-version governance logic instance in the multiple versions of governance logic instances.

In this embodiment of this application, the computing device can update the instrumentation logic, and insert the second instrumentation into the application program based on updated instrumentation logic, to update an instrumentation point in the application program. This improves instrumentation update efficiency of the application program.

In a possible implementation, in a process in which the computing device obtains the first plug-in code, the computing device obtains the first plug-in code based on a first class loader; and in a process in which the computing device obtains the second plug-in code, the computing device obtains the second plug-in code based on a second class loader, where the first class loader and the second class loader are different class loaders.

In this embodiment of this application, in the update process of the service governance function, the computing device can obtain the first plug-in code and the second plug-in code based on the different class loaders. In other words, the computing device defines separate class loaders for a new version and an old version of the service governance function. In this way, both the new-version service governance function and the old-version service governance function can be stored in the memory. This avoids interruption of the service governance function, and improves the hot update performance of the service governance function.

In a possible implementation, the multiple versions of governance logic instances include different old and new versions of governance logic instances that are created by the governance function scheduler based on the plug-in code, and the first governance logic instance is a latest-version governance logic instance in the multiple versions of governance logic instances.

In this embodiment of this application, the different old and new versions of governance logic instances coexist in the computing device. The computing device can request, by using the first instrumentation, the governance function scheduler to allocate the latest-version governance logic instance from the multiple versions of governance logic instances, so that the hot update performance of the service governance function is improved. In a possible implementation, a hot instrumentation device of the computing device performs instrumentation on the application program by using an instrumentation interface function provided by Java agent. Specifically, the hot instrumentation device mounts, to a virtual machine that executes the application program, a transformer that adds a point for a specified class, and triggers the transformer to add, for the specified class, the point to the application program.

In this embodiment of this application, the computing device can perform instrumentation on the application program based on the instrumentation interface function, so that the implementability of the solution is improved.

In a possible implementation, when the first instrumentation in the application program is executed, the second governance logic instance has not been created, and in this case, the computing device continues to perform service governance based on the first service governance logic.

In this embodiment of this application, the computing device loads the new-version service governance logic, but the governance function scheduler has not created the second service governance logic instance. The first instrumentation still invokes the governance function scheduler to allocate the first governance logic instance to execute the first service governance logic. This avoids the interruption of the service governance function.

In a possible implementation, when the second governance logic instance has been created, but the first governance logic instance has not executed the first service governance logic, the second governance logic instance and the first governance logic instance coexist. When the first instrumentation is executed, the governance function scheduler allocates the second governance logic instance to execute the second service governance logic. Execution of the second service governance logic by the second governance logic instance does not interrupt execution of the first service governance logic by the first governance logic instance.

In this embodiment of this application, the governance function scheduler of the computing device can create and manage the first governance logic instance and the second governance logic instance, and both the first governance logic instance and the second governance logic instance may execute service governance logic, so that the update process of the service governance function is not interrupted, and the hot update performance of the service governance function is improved.

In a possible implementation, when the second governance logic instance has been created, and the first governance logic instance has executed the first service governance logic, the governance function scheduler of the computing device can delete the first governance logic instance.

In this embodiment of this application, after the old-version first governance logic instance executes the first service governance logic, the computing device deletes the old-version first governance logic instance, so that memory utilization of the computing device is improved.

A second aspect of embodiments of this application provides a service governance apparatus. The service governance apparatus includes a transceiver unit and a processing unit. The transceiver unit is configured to obtain first plug-in code, where the first plug-in code includes first service governance logic and first instrumentation logic, and the first service governance logic is decoupled from the first instrumentation logic. The processing unit is configured to insert a first instrumentation into an application program based on the first instrumentation logic, where the first instrumentation is used for requesting a governance function scheduler to allocate a first governance logic instance from multiple versions of governance logic instances, the first governance logic instance is used for executing the first service governance logic, and the application program is a running program. The processing unit is further configured to perform service governance based on the first service governance logic when the first instrumentation is executed.

In a possible implementation, the transceiver unit is further configured to obtain second plug-in code, where the second plug-in code includes second service governance logic. The processing unit is further configured to create a second governance logic instance by using the governance function scheduler, where the second governance logic instance is used for executing the second service governance logic, and the second governance logic instance and the first governance logic instance coexist.

In a possible implementation, the second governance logic instance is used for updating the multiple versions of governance logic instances, and the processing unit is further configured to perform service governance based on the second service governance logic when the first instrumentation is executed.

In a possible implementation, the second plug-in code further includes second instrumentation logic. The processing unit is further configured to: insert a second instrumentation into the application program based on the second instrumentation logic, where the second instrumentation is used for updating the first instrumentation, and the second instrumentation is used for requesting the governance function scheduler to allocate the second governance logic instance; and perform service governance based on the second service governance logic when the second instrumentation is executed.

In a possible implementation, the transceiver unit is specifically configured to: obtain the first plug-in code based on a first class loader; and obtain the second plug-in code based on a second class loader, where the first class loader and the second class loader are different class loaders.

In a possible implementation, the first governance logic instance is a latest-version governance logic instance in the multiple versions of governance logic instances.

A third aspect of embodiments of this application provides a computing device cluster. The computing device cluster includes one or more computing devices. The computing device includes a processor. The processor is coupled to a storage. The storage is configured to store instructions. When the instructions are executed by the processor, the computing device cluster is enabled to perform the method according to any one of the first aspect or the possible implementations of the first aspect.

A fourth aspect of embodiments of this application provides a computer-readable storage medium. The computer-readable storage medium stores instructions. When the instructions are executed, a computer is enabled to perform the method according to any one of the first aspect or the possible implementations of the first aspect.

A fifth aspect of embodiments of this application provides a computer program product. The computer program product includes instructions. When the instructions are executed, a computer is enabled to implement the method according to any one of the first aspect or the possible implementations of the first aspect.

It may be understood that, for beneficial effects that can be achieved by any computing device cluster, any computer-readable medium, any computer program product, or the like provided above, refer to beneficial effects in the corresponding method. Details are not described herein again.

### BRIEF DESCRIPTION OF DRAWINGS

FIG. 1 is a diagram of a system architecture of a service governance system according to an embodiment of this application;
FIG. 2 is a schematic flowchart of a service governance method according to an embodiment of this application;
FIG. 3 is a schematic flowchart of another service governance method according to an embodiment of this application;
FIG. 4 is a diagram of an example of creating governance logic instance according to an embodiment of this application;
FIG. 5 is a schematic flowchart of a service governance update method according to an embodiment of this application;
FIG. 6 is a schematic flowchart of a service governance update method according to an embodiment of this application;
FIG. 7 is another diagram of creating a governance logic instance according to an embodiment of this application;
FIG. 8 is a diagram of switching a governance logic instance according to an embodiment of this application;
FIG. 9 is a schematic flowchart of hot instrumentation according to an embodiment of this application;
FIG. 10 is a schematic flowchart of hot instrumentation according to an embodiment of this application;
FIG. 11 is a diagram of a service governance apparatus according to an embodiment of this application;
FIG. 12 is a diagram of a structure of a computing device according to an embodiment of this application;
FIG. 13 is a diagram of a structure of a computing device cluster according to an embodiment of this application; and
FIG. 14 is a diagram of a structure of another computing device cluster according to an embodiment of this application.

### DESCRIPTION OF EMBODIMENTS

Embodiments of this application provide a service governance method and an apparatus, to improve a hot update effect of a service governance function.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

First, some terms in embodiments of this application are described, to facilitate understanding of a person skilled in the art.

A class loader is a tool used by a virtual machine to load data of describing class from a class (class) file to a memory, and verify, transform, parse, and initialize the data.

Service governance refers to management and governance for microservices in a microservice architecture. Microservice governance is, for example, service registry and discovery, load balancing, and application routing.

A code instrumentation is a program probe technology in which a program running status is monitored by adding a point in a program. Insertion of to-be-executed logic does not affect running of an original program. The program probe technology is, for example, a Java agent technology.

Class isolation is an implementation of loading a needed class by using a class loader. In a Java virtual machine, if a same class file is loaded by using different class loaders, loaded classes are considered as different classes. Therefore, different class loaders are used for loading multiple versions of a class, so that the multiple versions of the class can coexist in the Java virtual machine without interfering with each other. In this way, the effect of isolation is achieved.

The following describes the service governance method and the apparatus provided in embodiments of this application with reference to the accompanying drawings.

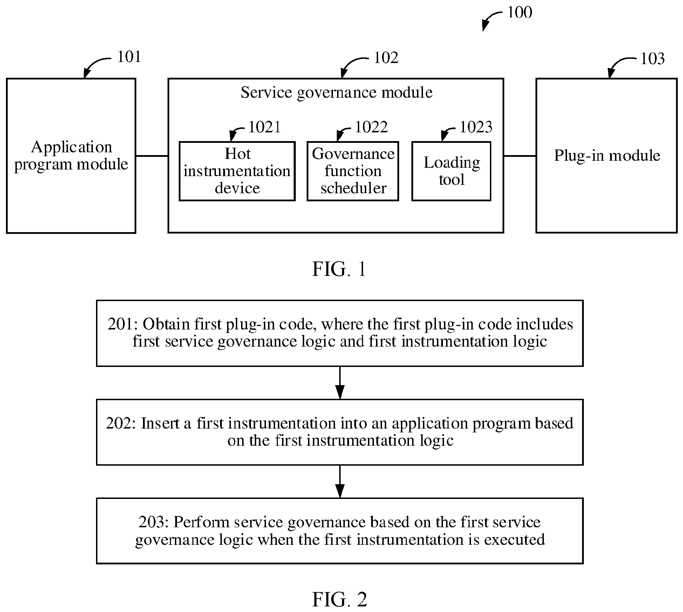

FIG. 1 is a diagram of a system architecture to which a service governance method is applied according to an embodiment of this application. In the system architecture shown in FIG. 1, a service governance system 100 includes an application program module 101, a service governance module 102, and a plug-in module 103. The service governance module 102 includes a hot instrumentation device 1021, a governance function scheduler 1022, and a loading tool 1023. The following describes specific functions of the modules in the service governance system 100.

The application program module 101 is configured to execute an application program that implements a service application. Instrumentation code can be inserted into the application program, and the instrumentation code can invoke the service governance module 102 to implement a service governance function. The application program is, for example, an application program developed based on a Java language, and the application program may be run on a virtual machine.

The service governance module 102 is configured to load a service governance plug-in from the plug-in module 103 and parse the service governance plug-in, to obtain service governance logic and instrumentation logic. The service governance module 102 is further configured to perform instrumentation on the application program based on the instrumentation logic. When the instrumentation is executed, the application program module 101 invokes the service governance module 102 to implement the service governance function. Service governance functions include service registry and discovery, service configuration, service flow control, circuit breaker, service degradation, load balancing, link tracing, and the like.

The hot instrumentation device 1021 is configured to insert instrumentation code into the application program based on the instrumentation logic. An insertion location of the instrumentation code is a point of the instrumentation code. When the application program is run to the point location, the application program module 101 executes the instrumentation code. In this way, the governance function scheduler 1022 is triggered to allocate a governance logic instance.

The governance function scheduler 1022 is configured to: create a governance logic instance based on the service governance logic, and manage a governance logic instance corresponding to the service governance logic of the plug-in. The governance function scheduler 1022 is further configured to schedule governance logic instances that are of different versions and that coexist in a computing device.

The loading tool 1023 is a customized class loader, and is configured to load the service governance plug-in in the plug-in module 103 to the service governance module 102. Each different plug-in or each different version of a same plug-in has an independent loading tool. The loading tool 1023 is further configured to parse plug-in code into the instrumentation logic and the service governance logic. The instrumentation logic is processed by the hot instrumentation device 1021, and the service governance logic is processed by the governance function scheduler 1022.

The plug-in module 103 is configured to store the plug-in code. The plug-in code includes the instrumentation logic and the service governance logic. The instrumentation logic indicates the instrumentation code inserted, by the hot instrumentation device, into the application program, and the insertion location. The service governance logic is code used for implementing the service governance function. When the instrumentation code inserted into the application program is executed, the service governance logic is invoked to implement the service governance function of the application program.

The following describes the service governance method provided in embodiments of this application with reference to the system architecture shown in FIG. 1.

FIG. 2 is a schematic flowchart of a service governance method according to an embodiment of this application. The service governance method provided in this embodiment of this application includes the following steps.

201: Obtain first plug-in code, where the first plug-in code includes first service governance logic and first instrumentation logic.

A computing device obtains the first plug-in code, where the first plug-in code includes the first service governance logic and the first instrumentation logic. The first service governance logic is decoupled from the first instrumentation logic. In other words, the computing device can separately perform hot update on the first service governance logic and the first instrumentation logic.

Specifically, a service governance module of the computing device loads the first plug-in code by using a loading tool, and identifies the first instrumentation logic and the first service governance logic based on the first plug-in code. The first instrumentation logic is processed by a hot instrumentation device of the service governance module, and the first service governance logic is processed by a governance function scheduler of the service governance module.

In this embodiment of this application, the computing device may obtain the first plug-in code based on a local file, or may obtain the first plug-in code by downloading a network resource. This is not specifically limited.

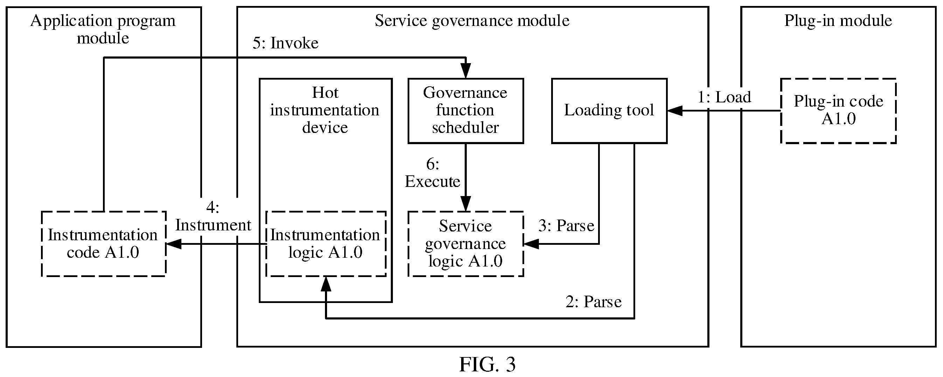

FIG. 3 is a schematic flowchart of another service governance method according to an embodiment of this application. In step 1 to step 3 in an example shown in FIG. 3, a service governance module of a computing device loads plug-in code A1.0 to the service governance module by using a loading tool, and parses the plug-in code A1.0 to obtain instrumentation logic A1.0 and service governance logic A1.0. The instrumentation logic A1.0 is processed by a hot instrumentation device, and the service governance logic A1.0 is processed by a governance function scheduler.

In the example shown in FIG. 3, execution logic of the computing device for the plug-in code A1.0 is shown as follows:

```
     for (class in all classes loaded in a plug-in)
     {
        if (the class is instrumentation logic code) {
            // TODO: The hot instrumentation device processes the code and performs step 2;
     }
     if (the class is service governance logic code) {
            // TODO: The governance function scheduler processes the service governance logic
 code and performs step 3;
     }
     }
```

202: Insert a first instrumentation into an application program based on the first instrumentation logic.

The computing device inserts the first instrumentation into the application program based on the first instrumentation logic, where the first instrumentation is used for requesting a governance function scheduler to allocate a first governance logic instance from multiple versions of governance logic instances, the first governance logic instance is used for executing the first service governance logic, and the application program includes a running application program. Specifically, the hot instrumentation device of the service governance module performs hot instrumentation on the running application program based on the first instrumentation logic.

It should be noted that in this embodiment of this application, the first instrumentation inserted into the application program may be one or more instrumentations. This is not specifically limited.

In a possible implementation, the multiple versions of governance logic instances include different old and new versions of governance logic instances that are created by the governance function scheduler based on the plug-in code, the first governance logic instance is a latest-version governance logic instance in the multiple versions of governance logic instances, and the first instrumentation is used for requesting the governance function scheduler to allocate the latest-version first governance logic instance.

In a possible implementation, the hot instrumentation device performs instrumentation on the application program by using an instrumentation interface function provided by Java agent. Specifically, the hot instrumentation device mounts, to a virtual machine that executes the application program, a transformer that adds a point for a specified class, and triggers the transformer to add, for the specified class, the point to the application program.

Still refer to FIG. 3. In step 4 of the example shown in FIG. 3, the hot instrumentation device inserts instrumentation code A1.0 into an application program based on the instrumentation logic A1.0. Specifically, based on the instrumentation logic A1.0, the hot instrumentation device mounts, to a virtual machine that executes the application program, a transformer that adds a point, and triggers the transformer to add, for a specified class, the point to the application program.

In the example shown in FIG. 3, the hot instrumentation device performs instrumentation on the application program by using an instrumentation interface function provided by Java agent. Instrumentation interface functions include an instrumentation.add Transformer function and an instrumentation.retransformClasses function. The instrumentation.addTransformer function is used for mounting, to the Java virtual machine that executes the application program, the transformer that adds the point for the specified class. instrumentation.retransformClasses is used for triggering the transformer to add the point for the specified class.

In the example shown in FIG. 3, execution code of the instrumentation inserted by the computing device into the application program based on the instrumentation interface function is shown as follows:

```
     instrumentation.addTransformer(new ClassFileTransformer()
     {
        transform(...,className,...) {
     for ("class specified for instrumentation"
in "list of classes specified for instrumentation") {
     if (className.euqals ("specified class to be instrumented")) {
        // TODO: Put instrumentation layer logic into the specified class to be instrumented;
     }
               }
}
},true);
     for ("class specified for instrumentation"
in "list of classes specified for instrumentation") {
         instrumentation.retransformClasses ("specified class to be instrumented")
     }
```

203: Perform service governance based on the first service governance logic when the first instrumentation is executed.

The computing device performs service governance based on the first service governance logic when the first instrumentation is executed. Specifically, when the first instrumentation is executed, the computing device invokes, based on the first instrumentation, a governance function scheduler to allocate the first governance logic instance, and invokes the first logic instance to execute the first service governance logic, to implement a service governance function corresponding to the first service governance logic.

Still refer to FIG. 3. In step 5 and step 6 in the example shown in FIG. 3, when the instrumentation code in the application program is executed, the computing device invokes, based on the instrumentation code A1.0, the governance function scheduler to allocate a governance logic instance A1.0, and the governance logic instance A1.0 executes the service governance logic A1.0.

In the example shown in FIG. 3, when the computing device executes a method in a class A of the application program, the instrumentation code is also executed. Class A code of the application program is shown as follows:

```
     class A {
              method {
                  Instrumentation (request to the governance function scheduler);
                  Native logic of the application program;
                  Instrumentation (request to the governance function scheduler);
         }
     }
```

It should be noted that, after the computing device parses the plug-in code to obtain the first service governance logic and first instrumentation logic that are structurally decoupled from each other, the governance function scheduler of the computing device creates the first governance logic instance. When the first governance logic instance is invoked, the first governance logic instance executes the first service governance logic.

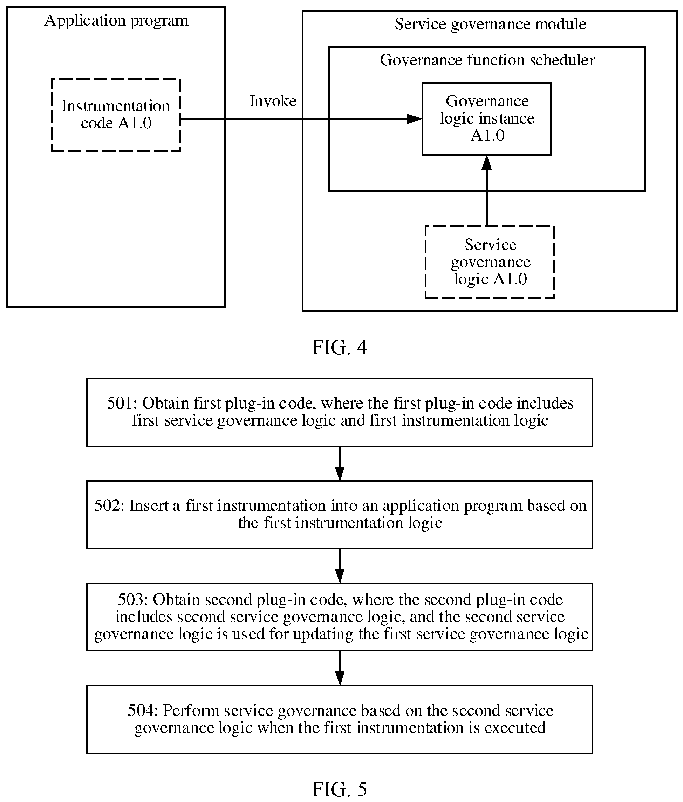

FIG. 4 is a diagram of creating a governance logic instance according to an embodiment of this application. In an example shown in FIG. 4, a governance function scheduler creates a governance logic instance A1.0, and the governance logic instance A1.0 is created only once. After the governance logic instance A1.0 has been created, when instrumentation code in an application program is executed, the governance function scheduler allocates the governance logic instance A1.0 based on an invocation request of the instrumentation code, and the governance logic instance A1.0 executes service governance logic A1.0. It can be learned from the foregoing embodiment that, the service governance logic and the instrumentation logic in the first plug-in code provided in this embodiment of this application are structurally decoupled from each other, so that the computing device can separately update the service governance logic and the instrumentation logic, and inserting the instrumentation into the application program by the computing device does not interrupt execution of the service governance logic by the service governance logic instance. In this way, interruption of the service governance function in an update process of the service governance function is avoided, and hot update performance of the service governance function is improved.

The foregoing describes the service governance method provided in embodiments of this application. Refer to FIG. 5. The following describes a method for updating service governance logic provided in embodiments of this application.

501: Obtain first plug-in code, where the first plug-in code includes first service governance logic and first instrumentation logic.

502: Insert a first instrumentation into an application program based on the first instrumentation logic.

In this embodiment of this application, a method performed by a computing device in step 501 and step 502 is similar to the method performed by the computing device in step 201 and step 202. Details are not described again.

503: Obtain second plug-in code, where the second plug-in code includes second service governance logic.

The computing device obtains the second plug-in code, where the second plug-in code includes the second service governance logic, and the second service governance logic is used for updating the first service governance logic and governance instances of multiple versions. Specifically, a service governance module of the computing device loads the second plug-in code by using a loading tool, and identifies the second service governance logic based on the second plug-in code. The second service governance logic is processed by a governance function scheduler of the service governance module.

In a possible implementation, the computing device may load the first plug-in code and the second plug-in code by using different loading tools. The loading tools are, for example, a first class loader and a second class loader. The computing device obtains the first plug-in code based on the first class loader, and obtains the second plug-in code based on the second class loader, where the first class loader and the second class loader are different class loaders.

After the computing device obtains the second plug-in code and parses the second plug-in code to obtain the second service governance logic, the computing device creates a second governance logic instance by using the governance function scheduler. The second governance logic instance is used for executing the second service governance logic. The second governance logic instance and a first governance logic instance may coexist. The first service governance logic and the second service governance logic are both stored in a memory of the computing device.

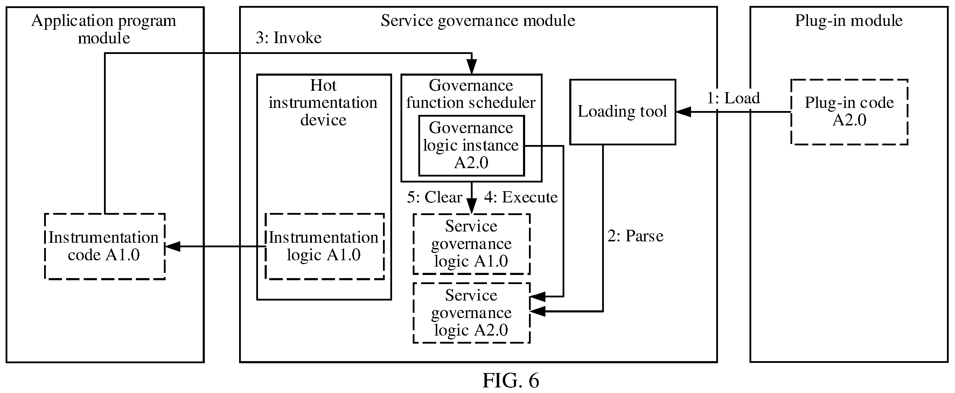

FIG. 6 is a schematic flowchart of updating service governance logic according to an embodiment of this application. In step 1 and step 2 in an example shown in FIG. 6, a service governance module of a computing device loads plug-in code A2.0 to the service governance module by using a loading tool, and parses the plug-in code A2.0 to obtain service governance logic A2.0. The service governance logic A2.0 is used for updating service governance logic A1.0.

In the example shown in FIG. 6, execution logic of the computing device for the plug-in code A2.0 is shown as follows:

```
for (class in all classes loaded in a plug-in) {
     if (the class is service governance logic code) {
            // TODO: A governance function scheduler processes the code and performs step 2;
     }
     }
```

In the example shown in FIG. 6, the governance function scheduler of the computing device creates a governance logic instance A2.0, and the governance logic instance A2.0 is used for executing the service governance logic A2.0.

504: Perform service governance based on the second service governance logic when the first instrumentation is executed.

The computing device performs service governance based on the second service governance logic when the first instrumentation is executed. Specifically, when the first instrumentation in an application program is executed and the second governance logic instance has been created, the computing device invokes, based on the first instrumentation, a governance function scheduler to allocate the second governance logic instance, and the second governance logic instance executes the second service governance logic. In this case, the second governance logic instance is a latest-version governance logic instance in the multiple versions of governance logic instances.

Still refer to FIG. 6. In step 3 and step 4 in the example shown in FIG. 6, when an instrumentation code in an application program is executed, if the governance logic instance A2.0 has been created, the computing device invokes, based on the instrumentation code A1.0, the governance function scheduler to allocate the governance logic instance A2.0, and the governance logic instance A2.0 executes the service governance logic A2.0.

In a possible implementation, when the first instrumentation in the application program is executed, if the second governance logic instance has not been created, the computing device continues to perform service governance based on the first service governance logic.

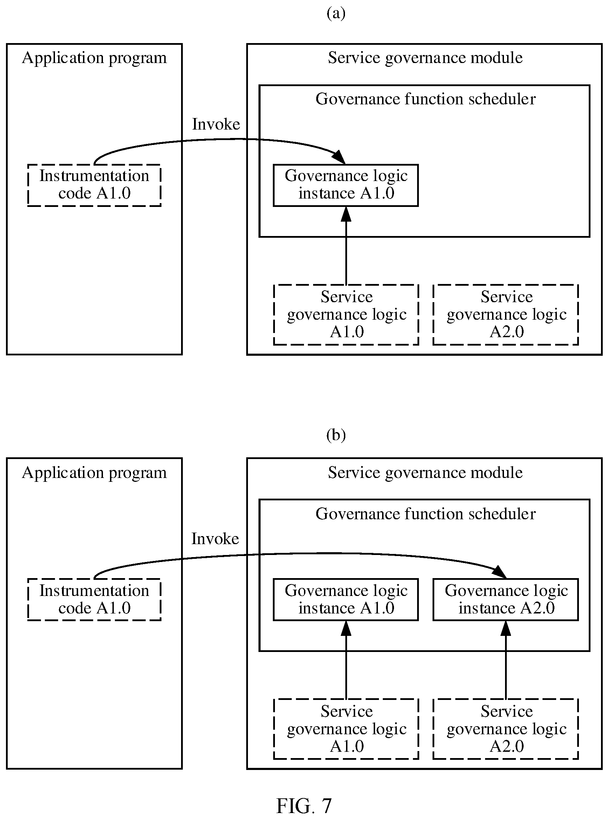

FIG. 7 is another diagram of creating a governance logic instance according to an embodiment of this application. In an example shown in (a) in FIG. 7, a computing device has loaded new-version service governance logic A2.0, but a governance function scheduler has not created a service governance logic instance A2.0 based on the service governance logic A2.0. In this case, when instrumentation code A1.0 in an application program is executed, the governance function scheduler is still invoked to allocate a governance logic instance A1.0, and the governance logic instance A1.0 executes old-version service governance logic A1.0.

In an example shown in (b) in FIG. 7, a computing device has a new-version loaded service governance logic A2.0, and a governance function scheduler has created a service governance logic instance A2.0 based on the service governance logic A2.0. In this case, when instrumentation code A1.0 in an application program is executed, the governance function scheduler is invoked to allocate the governance logic instance A2.0, and the governance logic instance A2.0 executes the new-version service governance logic A2.0.

In a possible implementation, when the second governance logic instance has been created, but the first governance logic instance has not executed the first service governance logic, the second governance logic instance and the first governance logic instance coexist. When the first instrumentation is executed, the governance function scheduler allocates the second governance logic instance, and the second governance logic instance executes the second service governance logic. Execution of the second service governance logic by the second governance logic instance does not interrupt execution of the first service governance logic by the first governance logic instance.

In a possible implementation, when the second governance logic instance has been created, and the first governance logic instance has executed the first service governance logic, the governance function scheduler of the computing device can delete the first governance logic instance. In this case, when the first instrumentation is executed, the computing device performs service governance based on the second service governance logic. To be specific, the governance function scheduler of the computing device allocates the second governance logic instance, and the second governance logic instance executes the second service governance logic.

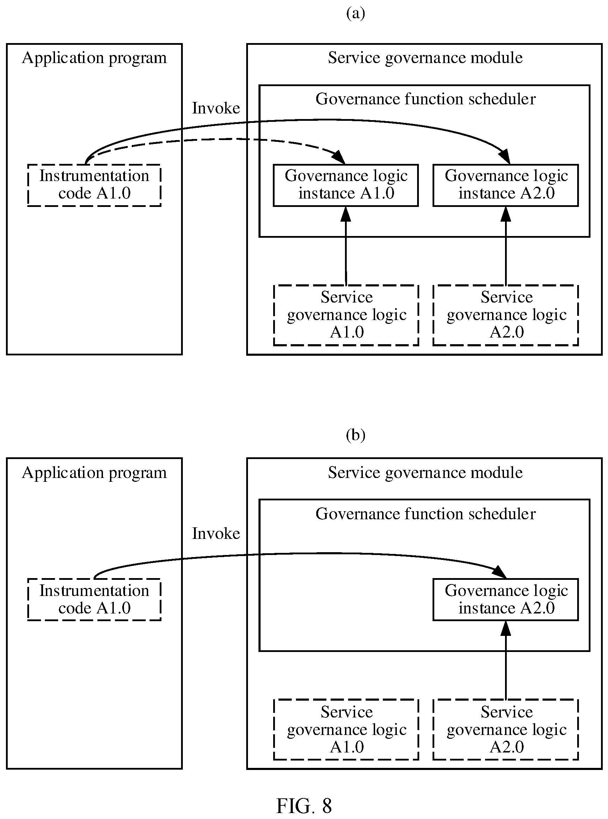

FIG. 8 is a diagram of clearing a governance logic instance according to an embodiment of this application. In an example shown in (a) in FIG. 8, after a new-version a governance logic instance A2.0 has been created, and when instrumentation code A1.0 is executed again, a governance function scheduler allocates the governance logic instance A2.0 to execute service governance logic A2.0.

In an example shown in (b) FIG. 8, after a new-version governance logic instance A2.0 has been created, and after a governance logic instance A1.0 has executed service governance logic A1.0, a governance function scheduler deletes the old-version governance logic instance A1.0. When instrumentation code A1.0 is executed, the governance function scheduler allocates the governance logic instance A2.0 to execute service governance logic A2.0.

It can be learned from the foregoing embodiments that, because the instrumentation logic and the service governance logic are decoupled from each other, the service governance logic can be independently updated without re-instrumentation, so that hot update performance of a service governance function is improved.

The foregoing describes the method for updating the service governance logic provided in embodiments of this application. The following describes a method for updating instrumentation logic provided in embodiments of this application.

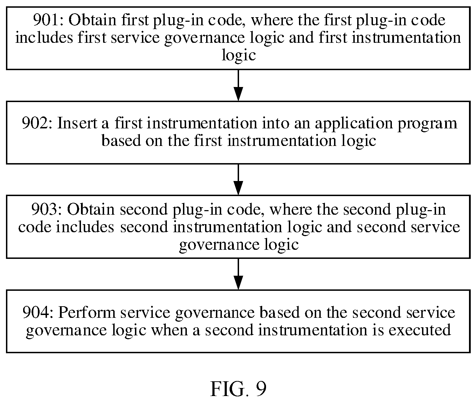

FIG. 9 is a schematic flowchart of a method for updating instrumentation logic according to an embodiment of this application. In the example shown in FIG. 9, the method for updating instrumentation logic provided in this embodiment of this application includes the following steps.

901: Obtain first plug-in code, where the first plug-in code includes first service governance logic and first instrumentation logic.

902: Insert a first instrumentation into an application program based on the first instrumentation logic.

In this embodiment of this application, a method performed by a computing device in step 901 and step 902 is similar to the method performed by the computing device in step 201 and step 202. Details are not described again.

903: Obtain second plug-in code, where the second plug-in code includes second instrumentation logic and second service governance logic.

The computing device obtains the second plug-in code, where the second plug-in code includes the second instrumentation logic and the second service governance logic, the second instrumentation logic is decoupled from the second service governance logic, and the second service governance logic is used for updating the first service governance logic. Specifically, a service governance module of the computing device loads the second plug-in code by using a loading tool, and identifies the second instrumentation logic and the second service governance logic based on the second plug-in code. The second instrumentation logic is processed by a hot instrumentation device of the service governance module, and the second service governance logic is processed by a governance function scheduler of the service governance module.

After the computing device obtains the second plug-in code and parses the second plug-in code to obtain the second instrumentation logic, the hot instrumentation device of the computing device inserts a second instrumentation into the application program based on the second instrumentation logic, where the second instrumentation is used for updating the first instrumentation, and the second instrumentation is used for requesting the governance function scheduler to allocate a second governance logic instance.

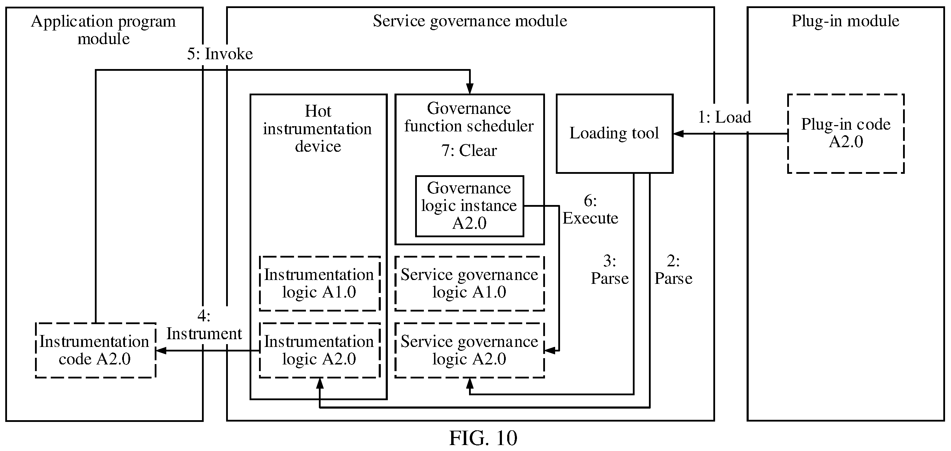

FIG. 10 is a schematic flowchart of updating service governance logic according to an embodiment of this application. In step 1 to step 4 in an example shown in FIG. 10, a service governance module of a computing device loads a plug-in code to the service governance module by using a loading tool, and parses the plug-in code to obtain instrumentation logic A2.0 and service governance logic A2.0. The instrumentation logic A2.0 is used for updating instrumentation logic A1.0, and the service governance logic A2.0 is used for updating service governance logic A1.0. A hot instrumentation device inserts instrumentation code into an application program based on the instrumentation logic A2.0.

In this embodiment of this application, the hot instrumentation device may also insert the second instrumentation into the application program by using an instrumentation interface function provided by Java agent. A specific process is similar to the foregoing process in which the hot instrumentation device inserts the first instrumentation by using the instrumentation interface function. Details are not described again.

904: Perform service governance based on the second service governance logic when the second instrumentation is executed.

The computing device performs service governance based on the second service governance logic when the second instrumentation is executed. Specifically, when the second instrumentation in the application program is executed and the second governance logic instance has been created, the computing device invokes, based on the second instrumentation, the governance function scheduler to allocate the second governance logic instance, and the second logic governance instance executes the second service governance logic.

Still refer to FIG. 10. In step 5 to step 7 in the example shown in FIG. 10, when the instrumentation code in the application program is executed, if a service governance instance A2.0 has been created, the computing device invokes, based on the instrumentation code A2.0, a governance function scheduler to allocate the governance logic instance A2.0, and the governance logic instance A2.0 executes the service governance logic A2.0. After a governance logic instance A1.0 has executed the service governance logic A1.0, the governance function scheduler deletes the governance logic instance A1.0.

It can be learned from the foregoing embodiment that, in this embodiment of this application, the computing device can update the instrumentation logic, and insert the second instrumentation into the application program based on updated instrumentation logic, to update an instrumentation point in the application program. This improves instrumentation update efficiency of the application program.

The foregoing describes the service governance method provided in embodiments of this application. The following describes a service governance apparatus provided in embodiments of this application.

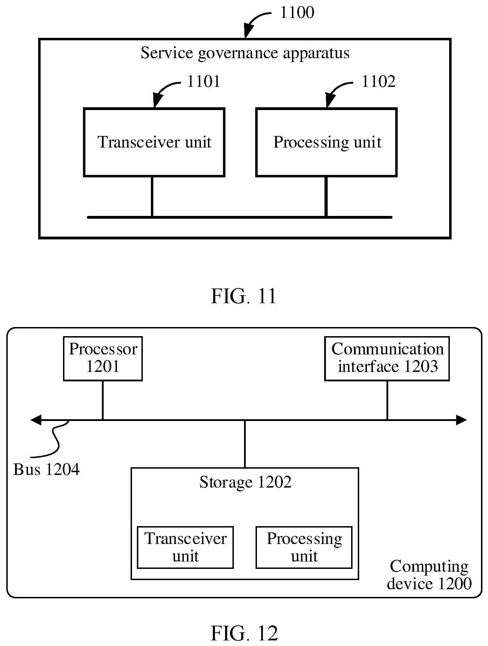

FIG. 11 is a diagram of a structure of a service governance apparatus according to an embodiment of this application. In an example shown in FIG. 11, the service governance apparatus is configured to implement the steps performed by the computing device in the foregoing embodiments. The service governance apparatus 1100 includes a transceiver unit 1101 and a processing unit 1102.

The transceiver unit 1101 is configured to obtain first plug-in code, where the first plug-in code includes first service governance logic and first instrumentation logic, and the first service governance logic is decoupled from the first instrumentation logic. The processing unit 1102 is configured to insert a first instrumentation into an application program based on the first instrumentation logic, where the first instrumentation is used for requesting a governance function scheduler to allocate a first governance logic instance from multiple versions of governance logic instances, the first governance logic instance is used for executing the first service governance logic, and the application program is a running program. The processing unit 1102 is further configured to perform service governance based on the first service governance logic when the first instrumentation is executed.

In a possible implementation, the transceiver unit 1101 is further configured to obtain second plug-in code, where the second plug-in code includes second service governance logic. The processing unit 1102 is further configured to create a second governance logic instance by using the governance function scheduler, where the second governance logic instance is used for executing the second service governance logic, and the second governance logic instance and the first governance logic instance coexist.

In a possible implementation, the second governance logic instance is used for updating multiple versions of governance logic instances, and the processing unit 1102 is further configured to perform service governance based on the second service governance logic when the first instrumentation is executed.

In a possible implementation, the second plug-in code further includes second instrumentation logic. The processing unit 1102 is further configured to: insert a second instrumentation into the application program based on the second instrumentation logic, where the second instrumentation is used for updating the first instrumentation, and the second instrumentation is used for requesting the governance function scheduler to allocate the second governance logic instance; and perform service governance based on the second service governance logic when the second instrumentation is executed.

In a possible implementation, the transceiver unit 1101 is specifically configured to: obtain the first plug-in code based on a first class loader; and obtain the second plug-in code based on a second class loader, where the first class loader and the second class loader are different class loaders.

In a possible implementation, the first governance logic instance is a latest-version governance logic instance in the multiple versions of governance logic instances.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a storage in a form of a program to be invoked by a processing element of the apparatus to perform a function of the unit. In addition, all or some of the units may be integrated together, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

It should be noted that, for ease of description, the foregoing method embodiments are described as a series of action combinations. However, a person skilled in the art should learn that the present invention or this application is not limited by the described action sequence. In addition, a person skilled in the art should also learn that embodiments described in this specification are all example embodiments, and actions involved are not necessarily required in the present invention or this application.

Another appropriate step combination that can be figured out by a person skilled in the art based on the foregoing described content also falls within the protection scope of the present invention or this application. In addition, a person skilled in the art should also learn that embodiments described in this specification are all example embodiments, and actions involved are not necessarily required in the present invention or this application.

FIG. 12 is a diagram of a structure of a computing device according to an embodiment of this application. As shown in FIG. 12, the computing device 1200 includes a processor 1201, a storage 1202, a communication interface 1203, and a bus 1204. The processor 1201, the storage 1202, and the communication interface 1203 are coupled through the bus (not marked in the figure). The storage 1202 stores instructions. When the execution instructions in the storage 1202 are executed, the computing device 1200 performs the method performed by the computing device in the foregoing method embodiment.

The computing device 1200 may be one or more integrated circuits configured to implement the foregoing method, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these integrated circuit forms. For another example, when the unit in the apparatus is implemented in a form of scheduling a program by a processing element, the processing element may be a general-purpose processor, for example, a central processing unit (central processing unit, CPU) or another processor that may invoke the program. For still another example, the units may be integrated together and implemented in a form of a system-on-a-chip (system-on-a-chip, SoC).

The processor 1201 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The storage 1202 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The storage 1202 stores executable program code, and the processor 1201 executes the executable program code to separately implement functions of the foregoing transceiver unit and processing unit, to implement the foregoing service governance method. In other words, the storage 1202 stores instructions for performing the foregoing service governance method.

The communication interface 1203 uses a transceiver module, for example, but not limited to, a network interface card or a transceiver, to implement communication between the computing device 1200 and another device or a communication network.

The bus 1204 may further include a power bus, a control bus, a status signal bus, and the like, in addition to a data bus. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. Buses may be classified into an address bus, a data bus, a control bus, and the like.

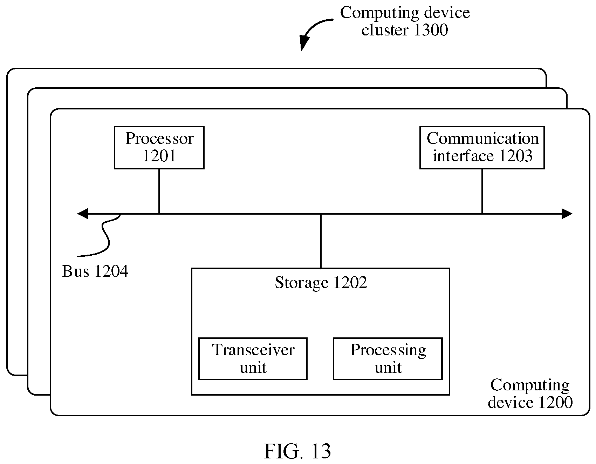

FIG. 13 is a diagram of a computing device cluster according to an embodiment of this application. As shown in FIG. 13, the computing device cluster 1300 includes at least one computing device 1200.

As shown in FIG. 13, the computing device cluster 1300 includes the at least one computing device 1200. A storage 1202 in one or more computing devices 1200 in the computing device cluster 1300 may store same instructions for performing the foregoing service governance method.

In some possible implementations, the storage 1202 in the one or more computing devices 1200 in the computing device cluster 1300 may alternatively separately store some instructions for performing the foregoing service governance method. In other words, a combination of the one or more computing devices 1200 may jointly execute the instructions for performing the foregoing service governance method.

It should be noted that storages 1202 in different computing devices 1200 in the computing device cluster 1300 may store different instructions that are respectively used for performing some functions of the service governance apparatus. In other words, the instructions stored in the storages 1202 in different computing devices 1200 may be used to implement functions of one or more modules in a transceiver unit and a processing unit.

In some possible implementations, the one or more computing devices 1200 in the computing device cluster 1300 may be connected through a network. The network may be a wide area network, a local area network, or the like.

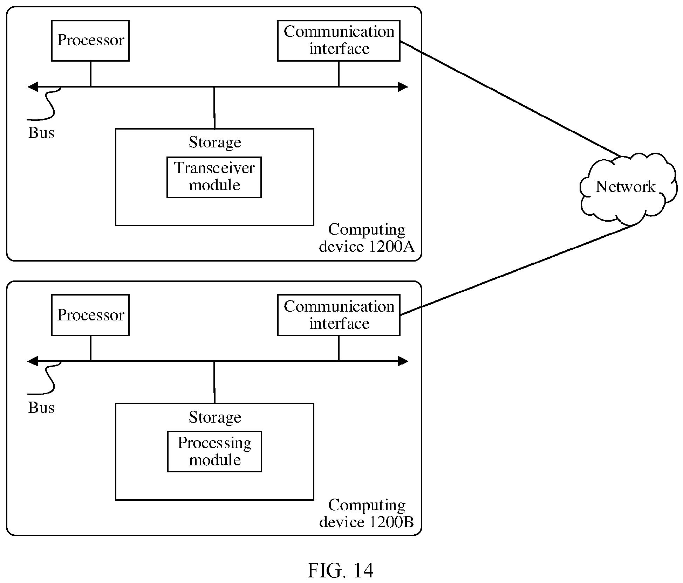

FIG. 14 is a diagram of computer devices in a computer cluster that are connected through a network according to an embodiment of this application. As shown in FIG. 14, two computing devices 1200A and 1200B are connected through the network. Specifically, the computing devices are connected to the network through communication interfaces in the computing devices.

In a possible implementation, a storage in the computing device 1200A stores instructions for performing a function of a transceiver module. In addition, a storage in the computing device 1200B stores instructions for performing a function of a processing module.

It should be understood that functions of the computing device 1200A shown in FIG. 14 may alternatively be completed by multiple computing devices. Similarly, functions of the computing device 1200B may alternatively be completed by the multiple computing devices.

In another embodiment of this application, a computer-readable storage medium is further provided. The computer-readable storage medium stores computer-executable instructions. When a processor of a device executes the computer-executable instructions, the device performs the method performed by the computing device in the foregoing method embodiment.

In another embodiment of this application, a computer program product is further provided. The computer program product includes computer-executable instructions, and the computer-executable instructions are stored in a computer-readable storage medium. When a processor of a device executes the computer-executable instructions, the device performs the method performed by the computing device in the foregoing method embodiment.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A service governance method, comprising:
obtaining first plug-in code, wherein the first plug-in code comprises first service governance logic and first instrumentation logic, and the first service governance logic is decoupled from the first instrumentation logic;
inserting a first instrumentation into an application program based on the first instrumentation logic, wherein the first instrumentation is used for requesting a governance function scheduler to allocate a first governance logic instance from multiple versions of governance logic instances, the first governance logic instance is used for executing the first service governance logic, and the application program is a running program; and
performing service governance based on the first service governance logic when the first instrumentation is executed.

2. The method according to claim 1, wherein the method further comprises:
obtaining second plug-in code, wherein the second plug-in code comprises second service governance logic; and
creating a second governance logic instance by using the governance function scheduler, wherein the second governance logic instance is used for executing the second service governance logic, and the second governance logic instance and the first governance logic instance coexist.

3. The method according to claim 2, wherein the second governance logic instance is used for updating the multiple versions of governance logic instances, and after the creating a second governance logic instance by using the governance function scheduler, the method further comprises:
performing service governance based on the second service governance logic when the first instrumentation is executed.

4. The method according to claim 2 or 3, wherein the second plug-in code further comprises second instrumentation logic, and the method further comprises:
inserting a second instrumentation into the application program based on the second instrumentation logic, wherein the second instrumentation is used for updating the first instrumentation, and the second instrumentation is used for requesting the governance function scheduler to allocate the second governance logic instance; and
performing service governance based on the second service governance logic when the second instrumentation is executed.

5. The method according to any one of claims 2 to 4, wherein the obtaining first plug-in code comprises:
obtaining the first plug-in code based on a first class loader; and
the obtaining second plug-in code comprises:
obtaining the second plug-in code based on a second class loader, wherein the first class loader and the second class loader are different class loaders.

6. The method according to any one of claims 1 to 5, wherein the first governance logic instance is a latest-version governance logic instance in the multiple versions of governance logic instances.

7. A service governance apparatus, comprising:
a transceiver unit, configured to obtain first plug-in code, wherein the first plug-in code comprises first service governance logic and first instrumentation logic, and the first service governance logic is decoupled from the first instrumentation logic; and
a processing unit, configured to insert a first instrumentation into an application program based on the first instrumentation logic, wherein the first instrumentation is used for requesting a governance function scheduler to allocate a first governance logic instance from multiple versions of governance logic instances, the first governance logic instance is used for executing the first service governance logic, and the application program is a running program, wherein
the processing unit is further configured to perform service governance based on the first service governance logic when the first instrumentation is executed.

8. The apparatus according to claim 7, wherein the transceiver unit is further configured to:
obtain second plug-in code, wherein the second plug-in code comprises second service governance logic; and
the processing unit is further configured to create a second governance logic instance by using the governance function scheduler, wherein the second governance logic instance is used for executing the second service governance logic, and the second governance logic instance and the first governance logic instance coexist.

9. The apparatus according to claim 8, wherein the second governance logic instance is used for updating the multiple versions of governance logic instances, and the processing unit is further configured to:
perform service governance based on the second service governance logic when the first instrumentation is executed.

10. The apparatus according to claim 8 or 9, wherein the second plug-in code further comprises second instrumentation logic, and the processing unit is further configured to:
insert a second instrumentation into the application program based on the second instrumentation logic, wherein the second instrumentation is used for updating the first instrumentation, and the second instrumentation is used for requesting the governance function scheduler to allocate the second governance logic instance; and
perform service governance based on the second service governance logic when the second instrumentation is executed.

11. The apparatus according to any one of claims 8 to 10, wherein the transceiver unit is specifically configured to:
obtain the first plug-in code based on a first class loader; and
obtain the second plug-in code based on a second class loader, wherein the first class loader and the second class loader are different class loaders.

12. The apparatus according to any one of claims 7 to 11, wherein the first governance logic instance is a latest-version governance logic instance in the multiple versions of governance logic instances.

13. A computing device cluster, comprising one or more computing devices, wherein the computing device comprises a processor, the processor is coupled to a storage, the storage is configured to store instructions, and when the instructions are executed by the processor, the computing device cluster is enabled to perform the method according to any one of claims 1 to 6.

14. A computer-readable storage medium, wherein the computer-readable storage medium stores instructions, and when the instructions are executed, a computer is enabled to perform the method according to any one of claims 1 to 6.

15. A computer program product, wherein the computer program product comprises instructions, and when the instructions are executed, a computer is enabled to implement the method according to any one of claims 1 to 6.
